# EUROPÄISCHE PATENTSCHRIFT

(11) **EP 1 755 385 B1**
(45) Veröffentlichungstag und Bekanntmachung des Hinweises auf die Patenterteilung: **14.05.2008**
(21) Anmeldenummer: 05749309.0
(22) Anmeldetag: 21.05.2005
(51) Int. Cl.: A01N 25/30, A01N 25/02, A01N 57/20

(54) **KONZENTRIERTE WÄSSRIGE FORMULIERUNGEN FÜR DEN PFLANZENSCHUTZ**
CONCENTRATED AQUEOUS FORMULATIONS FOR CROP PROTECTION
FORMULATIONS AQUEUSES CONCENTREES POUR LA PROTECTION PHYTOSANITAIRE

(30) Priorität: 01.06.2004 DE 102004026937
(43) Veröffentlichungstag der Anmeldung: 28.02.2007
(73) Patentinhaber: Bayer CropScience AG, 40789 Monheim (DE)
(72) Erfinder: FRISCH, Gerhard, 61273 Wehrheim (DE); SCHNABEL, Gerhard, 63820 Elsenfeld (DE); RUDE, Janine, 65830 Kriftel (DE)
(86) Internationale Anmeldenummer: PCT/EP2005/005524
(87) Internationale Veröffentlichungsnummer: WO 2005/117583

(56) Entgegenhaltungen:
- EP-A- 0 336 151
- EP-A- 0 413 267
- EP-A- 0 498 145
- EP-A- 0 498 785
- EP-A- 0 511 611
- EP-A- 0 577 914
- WO-A-00/49873
- WO-A-94/19941
- WO-A-99/45780
- WO-A-03/082009
- CA-A1- 2 136 144
- DATABASE WPI Section Ch, Week 200521 Derwent Publications Ltd., London, GB; Class C01, AN 2005-196869 XP002364321 & CN 1 545 881 A (WU Y) 17. November 2004 (2004-11-17)

## Beschreibung

Die Erfindung betrifft Pflanzenschutzmittel In Form wäßriger Lösungen, die
(a) 1 bis 50 Gew.-% in Wasser lösliche Pftanzenschutzm!ttetwirt<atoffe aus der Gruppe der Verbindungen der Formel (1) und deren Salze, 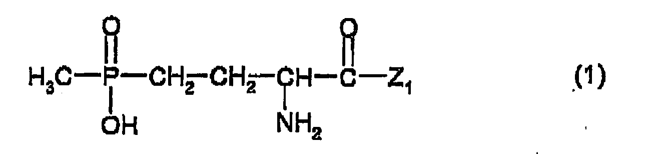 worin
   Z₁ einen Rest der Formel -OM, -NHCH(CH₃)CONHCH(CH₃)CO₂M oder -NHCHCCH₃)CONHCH[CH₂CH(CH₃)₂]CO₂M und dabei
   M = H oder ein Salz bildendes Kation bedeuten, (Wirkstoff vom Typ (a))
(c) 0 bis 40 Gew.-% organische Lösungsmittel,
(d) 1 bis 80 Gew.-% nichtionogene, anionaktive, kationaktive und/oder zwitterionische Tenside, wobei die Tenside (d) zu einer verbesserten Stabilität, Verfügbarkeit für die Pflanzen oder Wirkung der Pflanzenschutzmittel beitragen,
(e) 0,1 bis 20 Gew.-% nichtionogene Tenside aus der Gruppe der Alkylpolyglykoside,
(f) 0,1 bis 25 Gew.-% anorganische Salze aus der Gruppe Ammoniumsalze,
(g) 0 bis 15 Gew.-% andere nichtionogene, anionaktive, kationaktive und/oder zwitterionische Tenside,
(h) 0 bis 30 Gew.-% übliche Formulierungshilfsmittel und
(i) 0,1 bis 90 Gew.-% Wasser,
enthalten.

Wäßrige Formulierungen von Glufosinate-ammonium sind beispielsweise bekannt aus EP-A-0048436, EP-A-00336151 und EP-A-1093722. In Formulierungen sind Tenside enthalten, welche die Wirkung des Herbizids steigern. Die Wirkung hängt jedoch im Allgemeinen von dem Verhältnis an Wirkstoff und Tensid bzw. den Konzentrationen ab. Beispielsweise enthalten manche der Formulierungen von Glufosinate-ammonium einen Anteil an Fettalkoholpolyglykolethersulfat (z. B. Laurylethersulfat, ®Genapol LRO, Clariant), das in den Formulierungen die Wirkung des Glufosinate-ammonium steigert. Jedoch beobachtet man häufig bei den Formulierungen von Glufosinate-ammonium mit beispielsweise 120 g/l, 150 g/l, 200 g/l Wirkstoffgehalt Verluste an Wirkung, wenn der Anteil an Tensiden wie Fettalkoholpolyglykolethersulfat über eine bestimmte Menge erhöht wird.

Andererseits besteht generell ein Bedarf nach hochkonzentrierten Formulierungen von Pflanzenschutzmitteln, weil die höhere Konzentration vielerlei Vorteile hat; beispielsweise wird mit hochkonzentrierten Formulierungen ein geringerer Verpackungsaufwand nötig als mit niedrigkonzentrierten Formulierungen. Entsprechend reduziert sich der Aufwand für Herstellung, Transport und Lagerung; auch vereinfacht sich die Zubereitung der Spritzbrühen durch die kleineren Mengen Überraschenderweise wurde nun gefunden, dass mittels Zusatz von kleinen Mengen bestimmter Formulierungshilfstoffe Formulierungen von wasserlöslichen Pflanzenschutzmitteln aus der Gruppe der Verbindungen der Formel (1) und deren Salze hergestellt werden können, welche vergleichsweise höher aus der Gruppe der Verbindungen der Formel (1) und deren Salze konzentriert sind, d. h. einen höheren Gehalt an Wirkstoffen und/oder wirkungsverstärkenden Tensiden enthalten, und eine vergleichbare oder bessere biologische Wirkung bei der Anwendung ermöglichen.

Gegenstand der Erfindung sind dahei flüssige wäßrige Pflanzenschutzmittel In Form wäßriger Lösungen, dadurch gekennzeichnet, dass sie
(a) 1 bis 50 Gew.-% In Wasser lösliche Pflanzenschutzmittelwirkstoffe aus der Gruppe der Verbindungen der Formel (1) und deren Salze, 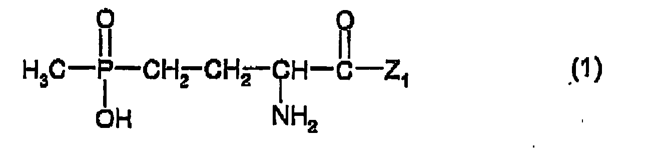 worin
   Z₁ einen Rest der Formel -OM. -NHCH(CH₃)CONHCH(CH₃)CO₂M oder -NHCH(CH₃)CONHCH[CH₂CH(CH₃)₂]CO₂M und dabei
   M = H oder ein Salz bildendes Kation bedeuten, (Wirkstoff vom Typ (a))
(c) 0 bis 40 Gew.-% organische Lösungsmittel,
(d) 1 bis 80 Gew.-% nichtionogene, anionaktive, kationaktive und/oder zwitterionische Tenside, wobei die Tenside (d) zu einer verbesserten Stabilität, Verfügbarkeit für die Pflanzen oder Wirkung der Pflanzenschutzmittel beitragen,
(e) 0,1 bis 20 Gew.-% nichtionogene Tenside aus der Gruppe der Alkylpolyglykoside,
(f) 0,1 bis 25 Gew.-% anorganische Salze aus der Gruppe Ammoniumsalze,
(g) 0 bis 15 Gew.-% andere nichtionogene, anionaktive, kationaktive und/oder zwitterionische Tenside,
(h) 0 bis 30 Gew.-% übliche Formulierungshilfsmittel und
(i) 0,1 bis 90 Gew.-% Wasser,
enthalten.

Die erfindungsgemäßen wäßrigen Formulierungen eignen sich vorzugsweise für Wirkstoffe vom Typ (a) aus der Gruppe der Glufosinate(salze), insbesondere Glufosinate-ammonium.

Die Schadorganismen, welche durch die Anwendung der Pflanzenschutzmittel kontrolliert werden können, sind unerwünschte Pflanzen.

Die Verbindungen der Formel (1) enthalten ein asymmetrisches C-Atom. Das L-Enantiomere wird dabei als biologisch aktives Isomer angesehen. Die Formel (1) umfaßt daher alle Stereoisomeren und deren Gemische, insbesondere das Racemat und das jeweils biologisch wirksame Enantiomer. Beispiele für Wirkstoffe der Formel (1) sind folgende:
◆ Glufosinate und dessen Ammoniumsalz in racemischer Form, d.h. 2-Amino-4-[hydroxy(methyl)phosphinoyl]-butansäure bzw. dessen Ammoniumsalz,
◆ das L-Enantiomer von Glufosinate und dessen Ammoniumsalz,
◆ Bilanafos/Bialaphos, d.h. L-2-Amino-4-[hydroxy(methyl)phosphinoyl]-butanoyl-L-alaninyl-L-alanin und dessen Natriumsalz.

Das Racemat von Glufosinate-ammonium wird alleine üblicherweise in Dosierungen ausgebracht, die zwischen 200 und 1000 g a.i./ha (=Gramm Aktivsubstanz pro Hektar) liegen. Glufosinate-ammonium ist in diesen Dosierungen vor allem dann wirksam, wenn es über grüne Pflanzenteile aufgenommen wird; siehe "The Pesticide Manual" 13th Edition, British Crop Protection Council 2003. Glufosinate-ammonium wird vorwiegend zur Bekämpfung von Unkräutern und Ungräsern in Plantagenkulturen und auf Nichtkulturland sowie mittels spezieller - Applikationstechniken auch zur Zwischenreihenbekämpfung in landwirtschaftlichen Flächenkulturen wie Mais, Baumwolle u.a. eingesetzt. Zunehmende Bedeutung hat auch der Einsatz in transgenen Kulturen, welche gegenüber dem Wirkstoff resistent oder tolerant sind.

Die genannten Kurzbezeichnungen für Glufosinate, ("common names") sind dem Fachmann bekannt; siehe beispielsweise "The Pesticide Manual" 13th Edition, Crop Protection Council 2003; die Bezeichnungen umfassen dabei auch die bekannten Derivate wie Salze von Glufosinate, insbesondere die handelsüblichen Formen.

Im Zusammenhang mit der vorliegenden Erfindung bezeichnet der Begriff "organische Lösungsmittel" (Komponente (c)) beispielsweise unpolare Lösungsmittel, polare protische oder aprotische polare Lösungsmittel und deren Mischungen. Beispiele für Lösungsmittel im Sinne der Erfindung sind
◆ aliphatische oder aromatische Kohlenwasserstoffe, wie z.B. Mineralöle bzw. Toluol, Xylole und Naphthalinderivate;
◆ halogenierte aliphatische oder aromatische Kohlenwasserstoffe wie Methylenchlorid bzw. Chlorbenzol;
◆ aliphatische Alkohole, wie z.B. Alkanole mit 1 bis 12 C-Atomen, vorzugsweise 1 bis 6 C-Atomen wie Methanol, Ethanol, Propanol, Isopropanol und Butanol, oder mehrwertige Alkohole wie Ethylenglykol, Glycerin,
◆ Ether wie Diethylether, Tetrahydrofuran (THF), Dioxan,
◆ Alkylenglykolmonoalkyether und -dialkylether wie z.B. Propylenglykolmonomethylether, Propylenglykolmonoethylether, Ethylenglykolmonomethylether oder -monoethylether, Diglyme und Tetraglyme;
◆ Amide wie Dimethylformamid (DMF), Dimethylacetamid, Dimethylcaprylamid, Dimethylcaprinamid (^{®}Hallcomide) und N-Alkylpyrrolidone;
◆ Ketone wie Aceton;
◆ Ester auf Basis von Glycerin und Carbonsäuren wie Glycerinmono-, di- und triacetat,
◆ Phthalsäureester;
◆ Lactame;
◆ Kohlensäurediester;
◆ Nitrile wie Acetonitril, Propionitril, Butyronitril und Benzonitril;
◆ Sulfoxide und Sulfone wie Dimethylsulfoxid (DMSO) und Sulfolan;
◆ Öle, z.B. auf pflanzlicher Basis wie Maiskeimöl und Rapsöl.

Häufig eignen sich auch Kombinationen verschiedener Lösungsmittel, die zusätzlich Alkohole wie Methanol, Ethanol, n- und i-Propanol, n-, i-, t- und 2-Butanol enthalten.

Im Falle einphasiger wäßrig-organischer Lösungen kommen die ganz oder weitgehend wassermischbaren Lösungsmittel oder Lösungsmittelgemische in Frage.

Bevorzugte organische Lösungsmittel im Sinne der vorliegenden Erfindung sind aromatische Lösungsmittel wie Toluol, o-, m- oder p-Xylol und deren Gemische, 1-Methylnaphthalin, 2-Methylnaphthalin, 6-16C-Aromatengemische wie z.B. die Solvesso®-Reihe (ESSO) mit den Typen Solvesso® 100 (Kp. 162-177 °C), Solvesso® 150 (Kp. 187-207 °C) und Solvesso® 200 (Kp. 219-282 °C), Phthalsäure-(1-12C)Alkylester, speziell Phthalsäure(4-8C)Alkylester, mit Wasser nicht mischbare Ketone, wie beispielsweise Cyclohexanon oder lsophoron, oder 6-20C-Aliphaten, die linear oder cyclisch sein können, wie die Produkte der Shellsol®-Reihe, Typen T und K oder BP-n Paraffine, Ester wie Glycerintriacetat sowie die polaren organischen Lösungsmittel N-Methylpyrrolidon und Dowanol® PM (Propylenglykol-monomethylether).
Insbesondere bevorzugt sind die polaren organischen Lösungsmittel.

Die erfindungsgemäßen Formulierungen enthalten als Komponente (d) anionaktive, kationaktive oder zwitterionische und/oder nichtionogene oberflächenaktive Verbindungen (Tenside), welche zu einer verbesserten Stabilität, Verfügbarkeit für die Pflanzen oder Wirkung der formulierten Pflanzenschutzmittel beitragen sollen.

Beispiele für anionaktive Tenside sind (wobei EO=Ethylenoxid-Einheiten, PO=Propylenoxid-Einheiten und BO=Butylenoxid-Einheiten bedeuten):
d1-1) Anionische Derivate von Fettalkoholen mit 10 - 24 Kohlenstoffatomen mit 0-60 EO und/oder 0-20 PO und/oder 0-15 BO in beliebiger Reihenfolge in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapol^{®}LRO, Sandopan^{®}-Marken, Hostaphat/Hordaphos^{®}-Marken von Clariant;
d1-2) anionische Derivate von Copolymeren bestehend aus EO-, PO- und/oder BO-Einheiten mit einem Molekulargewicht von 400 bis 10⁸ in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);
d1-3) anionische Derivate von Alkylenoxydaddukten von C₁ - C₉ Alkoholen in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);
d1-4) anionische Derivate von Fettsäure-alkoxylaten in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);

Bevorzugte anionaktive Tenside sind
Alkylpolyglykolethersulfate, insbesondere Fettalkoholdiethylenglykolethersulfat (z. B. Genapol LRO®, Clariant), oder
Alkylpolyglykolethercarboxylate (z. B. 2-(lsotridecyloxy-polyethylenoxy)-ethylcarboxymethyl-ether, Marlowet 4538®, Hüls)

Beispiele für kationaktive oder zwitterionische Tenside sind (wobei EO=EthylenoxidEinheiten, PO=Propylenoxid-Einheiten und BO=Butylenoxid-Einheiten bedeuten):
d2-1) Alkylenoxidaddukte von Fettaminen, quartäre Ammonium-Verbindungen mit 8 bis 22 Kohlenstoffatomen (C₈-C₂₂) wie z.B. die Genamin^{®} C-, L-, O-, T-Marken von Clariant;
d2-2) oberflächenaktive, zwitterionische Verbindungen wie Tauride, Betaine und Sulfobetaine in Form von Tegotain^{®}-Marken von Goldschmidt, Hostapon^{®}T- und Arkopon^{®}T-Marken von Clariant.

Beispiele für nichtionogene Tenside sind:
d3-1) Fettalkohole mit 10-24 Kohlenstoffatomen mit 0-60 EO und/oder 0-20 PO und/oder 0-15 BO in beliebiger Reihenfolge. Beispiele für derartige Verbindungen sind Genapol^{®}C-, L-, O-, T-, UD-, UDD-, X-Marken von Clariant, Plurafac^{®}- und Lutensol^{®} A-, AT-, ON-, TO-Marken von BASF, Marlipal^{®} 24 und 013 Marken von Condea, Dehypon^{®}-Marken von Henkel, Ethylan^{®}-Marken von Akzo-Nobel wie Ethylan CD 120;
d3-2) Fettsäure- und Triglyceridalkoxylate wie die Serdox^{®}NOG-Marken von Condea oder die Emulsogen^{®}-Marken von Clariant;
d3-3) Fettsäureamidalkoxylate wie die Comperlan^{®}-Marken von Henkel oder die Amam^{®}-Marken von Rhodia;
d3-4) Alkylenoxydaddukte von Alkindiolen wie die Surfynol^{®}-Marken von Air Products; Zuckerderivate wie Amino- und Amidozucker von Clariant;
d3-5) Glukitole von Clariant;
d3-6) oberflächenaktive Verbindungen auf Silikon- bzw Silanbasis wie die Tegopren^{®}-Marken von Goldschmidt und die SE^{®}-Marken von Wacker, sowie die Bevaloid^{®}- , Rhodorsil^{®}- und Silcolapse^{®}-Marken von Rhodia (Dow Corning, Reliance, GE, Bayer),
d3-7) grenzflächenaktive Sulfonamide z.B. von Bayer;
d3-8) grenzflächenaktive Polyacryl- und Polymethacrylderivate wie die Sokalan^{®}-Marken von der BASF;
d3-9) oberflächenaktive Polyamide wie modifizierte Gelatine oder derivatisierte Polyasparginsäure von Bayer und deren Derivate,
d3-10)tensidische Polyvinylverbindungen wie modifiziertes PVP wie die Luviskol^{®}-Marken von BASF und die Agrimer^{®}-Marken von ISP oder die derivatisierten Polyvinylacetate wie die Mowilith^{®}-Marken von Clariant oder die Polyvinylbutyrate wie die Lutonal^{®}-Marken von der BASF, die Vinnapas^{®}- und die Pioloform^{®}-Marken von Wacker oder modifizierten Polyvinylalkohole wie die Mowiol^{®}-Marken von Clariant,
d3-11)oberflächenaktive Polymere auf Basis von Maleinsäureanhydrid und/oder Umsetzungsprodukten von Maleinsäureanhydrid sowie Maleinsäureanhydrid und/oder Umsetzungsprodukte von Maleinsäureanhydrid beinhaltende Copolymere wie die Agrimer^{®}-VEMA-Marken von ISP,
d3-12)oberfächenaktive Derivate von Montan-, Polyethylen-, und Polypropylenwachsen wie die Hoechst^{®}-wachse oder die Licowet^{®}-Marken von Clariant,
d3-13)Alkylenoxydaddukte auf Polyolbasis wie Polyglykol^{®}-Marken von Clariant,
d3-14) grenzflächenaktive Polyglyceride und deren Derivate von Clariant.

Die erfindungsgemäßen Formulierungen enthalten als Komponente (e) nichtionogene Tenside aus der Gruppe der Alkylpolyglykoside. Geeignet sind dabei vorzugsweise
e2) Alkylpolyglycoside in Form der APG^{®}-Marken von Henkel, beispielsweise ®Plantaren APG 225 (Fettalkohol C₈-C₁₀-Glucosid),
e6) Alkylpolyglykosid-Alkylpolysaccharid-Mischungen auf Basis C₈-C₁₀-Fettalkohol wie ®Glucopon 225 DK und ®Glucopon 215 CSUP (Cognis).

Bevorzugt sind als Komponente (e) die Alkylpolyglykoside-Alkylpolysaccharid-Mischungen wie Atplus 435.

Die erfindungsgemäßen Formulierungen enthalten als Komponente (f) anorganische Salze aus der Gruppe der Ammoniumsalze, beispielsweise Ammoniumsulfat, Ammoniumchlorid, Ammoniumbromid, vorzugsweise Ammoniumsulfat.
Die Verwendung von Alkylpolyglykosiden als Tenside in Pflanzenschutzmitteln ist im Prinzip bekannt (siehe beispielsweise EP-A-0511611 = US-A-5,258,358). Dort wird auch erwähnt, dass Ammoniumsulfat als Frostschutzmittel hinzugefügt werden kann. Konkrete Beispiele fehlen jedoch dazu. Außerdem wurde bisher nicht erkannt, dass mit der Kombination der Tenside (e) und den Salzen (f) Formulierungen mit besonders hoher Konzentration an Wirkstoffen (a) und Tensiden (d) herstellbar sind, die außerdem sehr wirkungsstark sind.

Die erfindungsgemäßen Formulierungen können gegebenenfalls andere anionaktive, nichtionogene, kationaktive und/oder zwitterionischeTenside als Komponente (g) enthalten. Beispiele für derartige Tenside sind oben im Zusammenhang mit Komponente (d) erwähnt.

Die erfindungsgemäßen Formulierungen enthalten als Komponente (h) übliche Formulierungshilfsmittel, beispielsweise Inertmaterialien, wie Haft-, Netz-, Dispergier-, Emulgier-, Penetrations-, Konservierungs- und Frostschutzmittel, Füll-, Träger- und Farbstoffe, Verdunstungshemmer und den pH-Wert (Puffer, Säuren und Basen) oder die Viskosität beeinflussende Mittel (z. B. Verdicker) oder Entschäumer.

Bei den wäßrigen Formulierungen ist es oft zweckmäßig Entschäumer zuzusetzen. Als Entschäumer kommen alle üblichen Entschäumer in Frage, vorzugsweise Entschäumer auf Silikonbasis, wie beispielsweise Silikonöle.
Bevorzugte Entschäumer sind solche aus der Gruppe der linearen Polydimethylsiloxane mit einer mittleren dynamischen Viskosität, gemessen bei 25 °C, im Bereich von 1000 bis 8000 mPas (mPas = Millipascalsekunde), vorzugsweise 1200 bis 6000 mPas, und mit einem Gehalt an Kieselsäure. Unter Kieselsäure sind Formen/Modifikationen wie Polykieselsäuren, Metakieselsäure, Orthokieselsäure, Kieselgel, Kieselsäuregele, Kieselgur, gefälltes SiO₂ etc. zu verstehen.
Entschäumer aus der Gruppe der linearen Polydimethylsiloxane enthalten als chemisches Gerüst eine Verbindung der Formel HO-[Si(CH₃)₂-O-]ₙ-H, wobei die Endgruppen modifiziert, beispielsweise verethert oder in der Regel mit den Gruppen -Si(CH₃)₃ verbunden sind.
Der Gehalt an Kieselsäure kann in einem weiten Bereich modifiziert werden und liegt in der Regel im Bereich von 0,1 bis 10 Gewichtsprozent, vorzugsweise 0,2 bis 5 Gewichtsprozent, insbesondere 0,2 bis 2 Gew.-%, Kieselsäure bezogen auf das Gewicht an Polydimethylsiloxan.
Beispiele für derartige Entschäumer sind ®Rhodorsil Antifoam 416 (Rhodia) und ®Rhodorsil Antifoam 481 (Rhodia).
®Rhodorsil Antifoam 416 ist ein mittelviskoses Silikonöl mit einer dynamischen Viskosität bei 25 °C von etwa 1500 mPas und einem Gehalt an einem Tensid und Kieselsäure. Aufgrund des Tensidgehalts ist die Dichte gegenüber dem reinen Silikonöl reduziert und beträgt etwa 0,995 g/cm³.
®Rhodorsil Antifoam 481 ist ein mittelviskoses Silikonöl mit einer dynamischen Viskosität bei 25 °C von etwa 4500 mPas und einem Gehalt an Kieselsäure. Die Dichte beträgt etwa 1,045 g/cm³.
Weitere Entschäumer aus der Gruppe der Silikone sind Rhodorsil 1824, Antimussol 4459-2 (Clariant), Entschäumer V 4459 (Clariant), SE Visk und AS EM SE 39 (Wacker).
Die Silikonöle können auch als Emulsionen eingesetzt werden.

Die zur Herstellung der o.a. Formulierungen notwendigen Hilfsmittel wie insbesondere Tenside sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem. Publ.Co.lnc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C. Hanser-Verlag, München, 4. Auflage 1986, und jeweils dort zitierte Literatur.

Mit Hilfe der Komponentenmischungen lassen sich demnach Pflanzenschutzmittel in Form wäßrigen Lösungen herstellen, welche
(a) 1 bis 50 Gew.-% in Wasser lösliche Pflanzenschutzmitteiwirkstoffe aus der Gruppe der Verbindungen der Formel (1) und deren Salze, 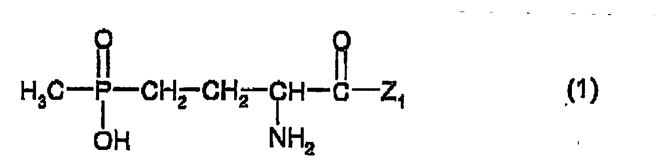 worin
   Z₁ einen Rest der Formel -OM, -NHCH(CH₃)CONHCH(CH₃)CO₂M oder -NHCH(CH₃)CONHCH[CH₂CH(CH₃)₂]CO₂M und dabei
   M = H oder ein Salz bildendes Kation bedeuten, (Wirkstoff vom Typ (a))
(c) 0 bis 40 Gew.-% organische Lösungsmittel,
(d) 1 bis 80 Gew.-% nichtionogene, anionaktive, kationaktive und/oder zwitterionische Tenside, wobei die Tenside (d) zu einer verbesserten Stabilität, Verfügbarkeit für die Pflanzen oder Wirkung der Pflanzenachutzmittel beitragen,
(e) 0,1 bis 20 Gew.-% nichtionogene Tenside aus der Gruppe der Alkylpolyglykoside,
(f) 0,1 bis 25 Gew.-% anorganische Salze aus der Gruppe Ammoniumsalze,
(g) 0 bis 15 Gew.-% andere nichtionogene, anionaktive, kationaktive und/oder zwitterionische Tenside,
(h) 0 bis 30 Gew.-% übliche Formulierungshilfsmittel und
(I) 0,1 bis 90 Gew.-% Wasser,
enthalten.

Das Gewichtsverhältnis der nichtionogenen Tenside (e) zu den unter (f) genannten anorganischen Salzen ist in der Regel im Bereich von 20:1 bis 1:20, vorzugsweise 10:1 bis 1:15, insbesondere 5:1 bis1:10, ganz besonders 1:1 bis 1:2.

Das Gewichtsverhältnis der Herbizide (a) zu den unter (d) genannten anionaktiven Tensiden in der Regel im Bereich von 5:1 bis 1:10, vorzugsweise 5:1 bis 1:10, insbesondere 2:1 bis 1:6.

Das Gewichtsverhältnis der Herbizide (a) zu den nichtionogenen Tenside (e) ist in der Regel im Bereich von 20:1 bis 1:1, vorzugsweise 10:1 bis 2:1, insbesondere 8:1 bis 3:1.

Die zur Herstellung der wäßrigen einphasigen Lösung zumischbaren Lösungsmittel sind vor allem unbegrenzt oder weitgehend mit Wasser mischbare organische Lösungsmittel wie beispielsweise N-Methylpyrrolidon (NMP), Dimethylformamid (DMF), Dimethylacetamid (DMA) oder Dowanol® PM (Propylenglykolmonomethylether).

Übliche Formulierungshilfsmittel (h) sind beispielsweise die genannten Inertmaterialien, Frostschutzmittel, Verdunstungshemmer, Konservierungsmittel, Farbstoffe, u. a.; bevorzugte Formulierungshilfsmittel (h) sind
◆ Frostschutzmittel und Verdunstungshemmer wie Glycerin oder Ethylenglykol, z.B. in einer Menge von 2 bis 10 Gew.-% und
◆ Konservierungsstoffe, z.B. Mergal K9N® (Riedel) oder Cobate C®,
◆ Entschäumer.

Die erfindungsgemäßen flüssigen Formulierungen können nach im Prinzip üblichen Verfahren hergestellt werden, d. h. durch Vermischen der Komponenten unter Rühren, Schütteln oder mittels statischer Mischverfahren. Die erhaltenen flüssigen Formulierungen sind stabil und gut lagerfähig.

Aufgrund der Kombination an anorganischen Salzen aus der Gruppe der Ammoniumsalze wie Ammoniumsulfat und des nichtionogenen Tensids aus der Gruppe der Alkylpolyglykoside wie Atplus 435 (Uniqema) (= Alkypolyglycosid-Mischung) werden höhere Konzentrationen an Wirkstoff und/oder anionaktivem Tensid ermöglicht, wobei im Vergleich mit der Wirkung von weniger konzentrierten Formulierungen eine ähnliche, zum Teil bessere Wirkung zu den herkömmlichen Formulierungen erzielt wird. Dies bedeutet auch eine Reduzierung an Produktions-, Verpackungs-, Lager- und Transportkosten.

Folglich eignen sich die erfindungsgemäßen Formulierungen in besonderem Maße zur Bekämpfung unerwünschten Pflanzenwuchses sowohl im Nichtkulturland als auch in toleranten Kulturen.

In den folgenden Beispielen beziehen sich Mengenangaben auf das Gewicht, sofern nichts anderes angegeben ist. Die Beispiele der Tabellen 1 und 2 betreffen erfindungsgemäße stabile Zusammensetzungen. Im Abschnitt "Biologische Beispiele" sind Ergebnisse von biologischen Tests zusammengefasst.

**Tabelle 1: Formulierungen (erfindungsgemäß)**

| | 1 ⁽¹⁾ | 2 | 3 | 4 | 5 | 6 | 7 | 8 | 9 | 10 | 11 |
|---|---|---|---|---|---|---|---|---|---|---|---|
| Glufosinate-ammonium (AS) | 25,00 | 25,00 | 25,00 | 25,00 | 25,00 | 25,00 | 25,00 | 25,00 | 25,00 | 25,00 | 25,00 |
| TEGO XP 5902 ⁽²⁾ | 35,00 | | | | | | | | | | |
| Empilan KA 5 ⁽²⁾ | | 35,00 | | | | | | | | | |
| C₁₂/C₁₄-O-(EO)₂-SO₃⁻Na⁺⁽²⁾ | | | 35,00 | 30,00 | 25,00 | 20,00 | 15,00 | 10,00 | | | |
| Sapogenat T 300 ⁽²⁾ | | | | | | | | | 35,00 | | |
| Bero1900 ⁽²⁾ | | | | | | | | | | 35,00 | |
| Geropon CF 812-I ⁽²⁾ | | | | | | | | | | | 35,00 |
| Atplus 435 ⁽³⁾ | 5,00 | 5,00 | 5,00 | 5,00 | 5,00 | 5,00 | 5,00 | 5,00 | 5,00 | 5,00 | 5,00 |
| Ammoniumsulfat | 7,00 | 7,00 | 7,00 | 7,00 | 7,00 | 7,00 | 7,00 | 7,00 | 7,00 | 7,00 | 7,00 |
| | | | | | | | | | | | |
| Propylenglykolmonomethylether | | | 3,00 | | 3,00 | | 3,00 | | | | |
| Propylenglykol | 3,00 | 3,00 | | 3,00 | | 3,00 | | 3,00 | 3,00 | 3,00 | 3,00 |
| | | | | | | | | | | | |
| Rhodorsil 481 ⁽⁴⁾ | 0,5 | 0,5 | 0,5 | 0,3 | 0,3 | 0,3 | 0,3 | 0,3 | 0,3 | 0,25 | 0,5 |
| Wasse (ad 100 %) | ad 100 | ad 100 | ad 100 | ad 100 | ad 100 | ad 100 | ad 100 | ad 100 | ad 100 | ad 100 | ad 100 |

**Tabelle 2: Formulierungen (erfindungsgemäß)**

| | 12 ⁽¹⁾ | 13 | 14 | 15 | 16 | 17 | 18 | 19 |
|---|---|---|---|---|---|---|---|---|
| Glufosinate-ammonium (AS) | 25,00 | 25,00 | 25,00 | 25,00 | 25,00 | 25,00 | 25,00 | 25,00 |
| C₁₂/C₁₄-O-(EO)₂-SO₃⁻ Na^{+ (2)} | 35,00 | 35,00 | 35,00 | | | 35,00 | | |
| Glucopon 225 DK ⁽³⁾ | | | | 35,00 | | | 35,00 | |
| Glucopon 215 CSUP ⁽³⁾ | | | | | 35,00 | | | 35,00 |
| Atplus 435 ⁽³⁾ | 5,00 | 5,00 | 5,00 | 5,00 | 5,00 | 5,00 | 5,00 | 5,00 |
| Ammoniumsulfat | 7,00 | 7,00 | 7,00 | 7,00 | 7,00 | 7,00 | 7,00 | 7,00 |
| | | | | | | | | |
| Propylenglykolmonomethylether | 3,00 | | 3,00 | | | | | |
| Propylenglykol | | 2,75 | | 2,50 | 2,50 | 2,50 | 2,50 | 2,50 |
| | | | | | | | | |
| Rhodorsil 481 ⁽⁴⁾ | 0,25 | | | | | | | |
| Rhodorsil 416 ⁽⁵⁾ | | 0,25 | | | | | | |
| Antimussol 4459-2 ⁽⁶⁾ | | | 0,50 | 0,50 | 0,50 | | | |
| Rhodorsil 454 ⁽⁷⁾ | | | | | | 0,50 | 0,50 | 0,50 |
| Wasser (ad 100%) | ad 100 | ad 100 | ad 100 | ad 100 | ad 100 | ad 100 | ad 100 | ad 100 |

| | | | | | | | | |
|---|---|---|---|---|---|---|---|---|
| Abkürzungen in Tabellen 1 und 2: (1) In den Spalten sind die Zusammensetzungen der Formulierungen 1 bis 11 (in Tabelle 1) bzw. 14 bis 19 (in Tabelle 2) angegeben, wobei die jeweilige Zeile die Menge der in der ersten Spalte bezeichneten Komponente in Gewichtsprozent enthält; AS Menge bezogen auf Aktivsubstanz (= active ingredient, a.i.) (2) C₁₂/C₁₄-O-(EO)₂-SO₃⁻ Na⁺ = C₁₂/C₁₄-Fettalkoholdiethylenglykolethersulfat (eingesetzt als ®Genapol LRO, Clariant); ®TEGO XP 5902 = Abmischung von Trisiloxan und einer Natriumsalzlösung (Degussa) ®Empilan KAS = Ethoxilierter Alkohol mit 5 EO (Huntsman); ®Sapogenat T 300 = Triisobutylphenolethoxlat mit 30 EO (Clariant), ®Berol 900 = Alkylglyzerid (Rhizinusethoxylat) mit 40 EO (Akzo-Nobel), ®Geropon-CF 812-1 = Sulfosuccinat-Aminsalz (Rhodia) (3) ®Glucopon 225 DK = Alkylpolyglykosid-Alkylpolysaccharid-Mischung auf Basis C₈-C₁₀-Fettalkohol (Cognis), ®Glucopon 215 CSUP = Alkylpolyglykosid-Alkylpolysaccharid-Mischung auf Basis C₈-C₁₀-Fettalkohol (Cognis), ®Atplus 435 = Alkylpolyglykosid-Alkylpolysaccharid-Mischung (Uniqema) (4) ®Rhodorsil 481 = Polydimethylsiloxanöl mit Kieselgel (Rhodia) (5) ®Rhodorsil 416 = Polydimethylsiloxanöl mit Kieselgel und Tensid (Rhodia) (6) ®Antimussol 4459-2 = Entschäumeremulsion auf Silikonbasis (Clariant) (7) ®Rhodorsil 454 = Entschäumer auf Basis Polydimethylsiloxanöl ohne Kieselsäure (Rhodia) | | | | | | | | |

### Biologische Beispiele

Die Formulierungen gemäß Tabellen 1 und 2 wurden mit Wasser verdünnt und mit einer Wasseraufwandmenge von 200 I/ha auf Nichtkulturland appliziert, das ein unter natürlichen Bedingungen aufgelaufenes Spektrum von Schadpflanzen enthielt. Die Bewertung nach 4 Wochen ergab, daß die grünen Teile der Schadpflanzen abgestorben waren und somit eine gute Kontrolle der Schadpflanzen erreicht worden ist.

## Patentansprüche

1. Pflanzenschutzmittel in Form wäßriger Lösungen, **dadurch gekennzeichnet, dass** sie
(a) 1 bis 50 Gew.-% in Wasser lösliche Pfianzenschutzmittetwirkstoffe aus der Gruppe der Verbindungen der Formel (1) und deren Salze, 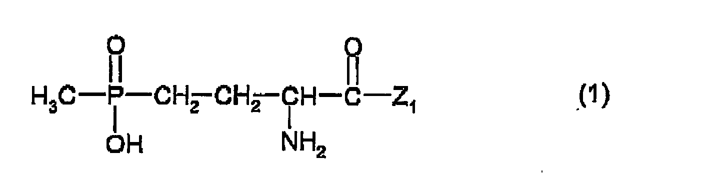 worin
Z₁ einen Rest der Formel -OM, -NHCH(CH₃)CONHCH(CH₃)CO₂M oder -NHCH(CH₃)CONHCH[CH₂CH(CH₃)₂]CO₂M und dabei
M = H oder ein Salz bildendes Kation bedeuten, (Wirkstoff vom Typ (a))
(c) 0 bis 40 Gew.-% organische Lösungsmittel,
(d) 1 bis 80 Gew.-% nichtionogene, anionaktive, kationaktive und/oder zwitterionische Tenside, wobei die Tenside (d) zu einer verbesserten Stabilität, Verfügbarkeit für die Pflanzen oder Wirkung der Pflanzenschutzmittel beitragen,
(e) 0,1 bis 20 Gew.-% nichtionogene Tenside aus der Gruppe der Alkylpolyglykoside,
(f) 0,1 bis 25 Gew.-% anorganische Salze aus der Gruppe Ammoniumsalze,
(g) 0 bis 15 Gew.-% andere nichtionogene, anionaktive, kationaktive und/oder zwitterionische Tenside,
(h) 0 bis 30 Gew.-% übliche Formulierungshilfsmittel und
(i) 0,1 bis 90 Gew.-% Wasser,
enthalten.

2. Pflanzenschutzmittel nach Anspruch 1, **dadurch gekennzeichnet, dass** sie
(a) 2 bis 40 Gew.-% in Wasser lösliche Pflanzenschutzmitteiwirkstoffe (Wirkstoffe vom Typ (a)),
(c) 0 bis 30 Gew.-% polare organische Lösungsmittel,
(d) 5 bis 70 Gew.-% nichtionogene, anionaktive, kationaktive und/oder zwitterionische Tenside,
(e) 0,5 bis 16 Gew.-% nichtionogene Tenside aus der Gruppe der Alkylpolyglykoside,
(f) 0,5 bis 20 Gew.-% anorganische Salze aus der Gruppe Ammoniumsalze,
(g) 0 bis 10 Gew.-% andere nichtionogene, anionaktive, kationaktive und/oder zwitterionische Tenside,
(h) 0 bis 20 Gew.-% übliche Formulierungshilfsmittel und
(i) 5 bis 70 % Wasser
enthalten.

3. Pflanzenschutzmittel nach Anspruch 1 oder 2, **dadurch gekennzeichnet, dass** sie
(a) 5 bis 30 Gew.-% in Wasser lösliche Pflanzenschutzmittelwirkstoffe (Wirkstoffe vom Typ (a)),
(c) 0 bis 20 Gew.-% polare organische Lösungsmittel,
(d) 6 bis 60 Gew.-% nichtionogene, anionaktive, kationaktive und/oder zwitterionische Tenside,
(e) 1 bis 10 Gew.-% nichtionogene Tenside aus der Gruppe der Alkylpolyglykoside,
(f) 1 bis 12 Gew.-% anorganische Salze aus der Gruppe Ammoniumsalze,
(g) 0 bis 10 Gew.-% andere nichtionogene, anionaktive, kationaktive und/oder zwitterionische Tenside,
(h) 0 bis 15 Gew.-%, übliche Formullerungshilfsrnittel und
(i) 10 bis 50 % Wasser,
enthalten.

4. Pflanzenschutzmittel nach einem der Ansprüche 1 bis 3, **dadurch gekennzeichnet, dass** der Wirkstoff vom Typ (a) Glufosinate-ammonium ist.

5. Pflanzenschutzmittel nach einem der Ansprüche 1 bis 4, **dadurch gekennzeichnet, dass** das Gewichtsverhältnis der nichtionogenen Tenside (e) zu den unter (f) genannten anorganischen Salzen im Bereich von 20:1 bis 1:20 ist.

6. Pflanzenschutzmittel nach einem der Ansprüche 1 bis 5, **dadurch gekennzeichnet, dass** die Tenside (d) anionaktive Tenside sind und das Gewichtsverhältnis der Herbizide (a) zu den anionaktiven Tensiden (d) im Bereich von 5:1 bis 1:10 ist.

7. Pflanzenschutzrnittel nach einem der Ansprüche 1 bis 6, **dadurch gekennzeichnet, dass** das Gewichtsverhältnis der Herbizide (a) zu den nichtionogenen Tenside (e) im Bereich von 20:1 bis 1:1 ist.

8. Verfahren zur Herstellung von einem nach einem der Ansprüche 1 bis 7 definierten Pflanzenschutzmittel, **dadurch gekennzeichnet, dass** man die Komponenten (a) bis (h) und gegebenenfalls weitere Komponenten, die in der Formulierung enthalten sind, mit Wasser (Komponente (i)) vermischt.

9. Verfahren zur Bekämpfung von unerwünschtem Pflanzenwuchs, **dadurch gekennzeichnet, daß** man eine wirksame Menge eines Pflanzenschutzmütels gemäß einem der Ansprüche 1 bis 7, das ein oder mehrere herbizide Wirkstoffe enthält, auf die Pflanzen, Pflanzenteile oder die Anbaufläche appliziert.

10. Verwendung von Mitteln gemäß einem der Ansprüche 1 bis 7 zur Kontrolle von Schadorganismen im Pflanzenschutz oder im Nichtkulturland, wobei die in den Mitteln enthaltenen Wirkstoffe gegen die Schadorganismen wirksam sind.

## Claims

1. A crop protectant composition in the form of an aqueous solution comprising
(a) 1% to 50% by weight of water-soluble active crop protectant ingredients from the group consisting of the compounds of the formula (1) and salts thereof, 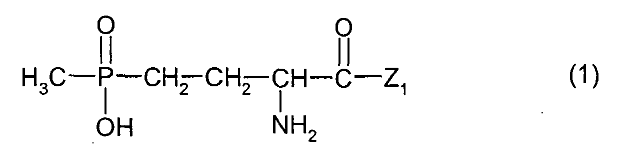 in which
Z₁ is a radical of the formula -OM,
-NHCH(CH₃)CONHCH(CH₃)CO₂M or
-NHCH(CH₃)CONHCH[CH₂CH(CH₃)_{2]}CO₂M, where
M = H or a salt-forming cation, (type (a) ingredient)
(c) 0% to 40% by weight of organic solvents,
(d) 1% to 80% by weight of nonionic, anionic, cationic and/or zwitterionic surfactants, the surfactants (d) contributing to improved stability, availability for the plants, or activity of the crop protectant composition,
(e) 0.1% to 20% by weight of nonionic surfactants from the group of the alkylpolyglycosides,
(f) 0.1% to 25% by weight of inorganic salts from the group of ammonium salts,
(g) 0% to 15% by weight of other nonionic, anionic, cationic and/or zwitterionic surfactants,
(h) 0% to 30% by weight of customary formulation assistants, and
(i) 0.1% to 90% by weight of water

2. The crop protectant composition as claimed in claim 1, comprising
(a) 2% to 40% by weight of water-soluble active crop protectant ingredients (type (a) ingredients),
(c) 0% to 30% by weight of polar organic solvents,
(d) 5% to 70% by weight of nonionic, anionic, cationic and/or zwitterionic surfactants,
(e) 0.5% to 15% by weight of nonionic surfactants from the group of the alkylpolyglycosides,
(f) 0.5% to 20% by weight of inorganic salts from the group of ammonium salts,
(g) 0% to 10% by weight of other nonionic, anionic, cationic and/or zwitterionic surfactants,
(h) 0% to 20% by weight of customary formulation assistants, and
(i) 5% to 70% by weight of water.

3. The crop protectant composition as claimed in claim 1 or 2, comprising
(a) 5% to 30% by weight of water-soluble active crop protectant ingredients (type (a) ingredients),
(c) 0 to 20% by weight of polar organic solvents,
(d) 6% to 60% by weight of nonionic, anionic, cationic and/or zwitterionic surfactants,
(e) 1% to 10% by weight of nonionic surfactants from the group of the alkylpolyglycosides,
(f) 1% to 12% by weight of inorganic salts from the group of ammonium salts,
(g) 0 to 10% by weight of other nonionic, anionic, cationic and/or zwitterionic surfactants,
(h) 0 to 15% by weight of customary formulation assistants, and
(i) 10% to 50% by weight of water.

4. The crop protectant composition as claimed in any one of claims 1 to 3, wherein the active ingredient of type (a) is glufosinate-ammonium.

5. The crop protectant composition as claimed in any one of claims 1 to 4, wherein the weight ratio of the nonionic surfactants (e) to the inorganic salts specified under (f) is in the range from 20:1 to 1:20.

6. The crop protectant composition as claimed in any one of claims 1 to 5, wherein the surfactants (d) are anionic surfactants and the weight ratio of the herbicides (a) to the anionic surfactants (d) is in the range from 5:1 to 1:10.

7. The crop protectant composition as claimed in any one of claims 1 to 6, wherein the weight ratio of the herbicides (a) to the nonionic surfactants (e) is in the range from 20:1 to 1:1.

8. A process for producing a crop protectant composition as defined in any one of claims 1 to 7, which comprises mixing components (a) to (h) and, if desired, further components present in the formulation with water (component (i)).

9. A method of controlling unwanted plant growth, which comprises applying an effective amount of a crop protectant composition as claimed in any one of claims 1 to 7, comprising one or more active herbicidal ingredients, to the plants, parts of plants, or the area under cultivation.

10. The use of a composition as claimed in any one of claims 1 to 7 for controlling pathogenic organisms in crop protection or on uncultivated land, the active ingredients in the composition being active against the pathogenic organisms.

## Revendications

1. Agents phytoprotecteurs sous forme de solutions aqueuses, **caractérisés en ce qu'**ils contiennent
(a) de 1 à 50 % en masse de substances actives phytoprotectrices hydrosolubles choisies dans le groupe constitué par les composés de formule (1) et leurs sels, 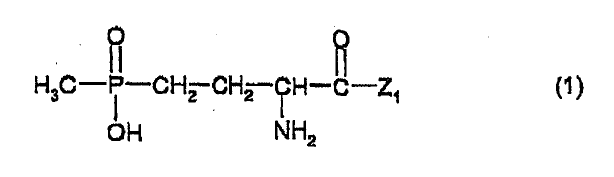 où
Z₁ représente un radical de formule -OM, -NHCH(CH₃)CONHCH(CH₃)CO₂M ou -NHCH(CH₃)CONHCH[CH₂OH(CH₃)₂]CO₂M et où M = H ou un cation salifiant (substance active de type (a)),
(c) de 0 à 40 % en masse de solvants organiques,
(d) de 1 à 80 % en masse d'agents de surface non ionogènes, anioniques, cationiques et/ou zwitterioniques, où les agents de surface (d) contribuent à une meilleure stabilité, à une disponibilité pour les plantes ou à l'effet des agents phytoprotecteurs,
(e) de 0,1 à 20 % en masse d'agents de surface non ionogènes choisis dans le groupe constitué par les alkylpolyglycosides,
(f) de 0,1 à 25 % en masse de sels inorganiques choisis dans le groupe constitué par les sels d'ammonium,
(g) de 0 à 15 % en masse d'autres agents de surface non ionogènes, anioniques, cationiques et/ou zwitterioniques,
(h) de 0 à 30 % en masse de formulants usuels et
(l) de 0,1 à 90 % en masse d'eau.

2. Agents phytoprotecteurs selon la revendication 1, **caractérisés en ce qu'**ils contiennent
(a) de 2 à 40 % en masse de substances actives phytoprotectrices hydrosolubles (substances actives de type (a)),
(c) de 0 à 30 % en masse de solvants organiques polaires,
(d) de 5 à 70 % en masse d'agents de surface non ionogènes, anioniques, cationiques et/ou zwitterioniques,
(e) de 0,5 à 15 % en masse d'agents de surface non ionogènes choisis dans le groupe constitué par les alkylpolyglycosides,
(f) de 0,5 à 20 % en masse de sels inorganiques choisis dans le groupe constitué par les sels d'ammonium,
(g) de 0 à 10 % en masse d'autres agents de surface non ionogènes, anioniques, cationiques et/ou zwitterioniques,
(h) de 0 à 20 % en masse de formulants usuels et
(l) de 5 à 70 % en masse d'eau.

3. Agents phytoprotecteurs selon la revendication 1 ou 2, **caractérisés en ce qu'**ils contiennent
(a) de 5 à 30 % en masse de substances actives phytoprotectrices hydrosolubles (substances actives de type (a)),
(c) de 0 à 20 % en masse de solvants organiques polaires,
(d) de 6 à 60 % en masse d'agents de surface non ionogènes, anioniques, cationiques et/ou zwitterioniques,
(e) de 1 à 10 % en masse d'agents de surface non ionogènes choisis dans le groupe constitué par les alkylpolyglycosides,
(f) de 1 à 12 % en masse de sels inorganiques choisis dans le groupe constitué par les sels d'ammonium,
(g) de 0 à 10 % en masse d'autres agents de surface non ionogènes, anioniques, cationiques et/ou zwitterioniques,
(h) de 0 à 15 % en masse de formulants usuels et
(l) de 10 à 50 % en masse d'eau.

4. Agents phytoprotecteurs selon l'une des revendications 1 à 3, **caractérisés en ce que** la substance active de type (a) est le glufosinate-ammonium.

5. Agents phytoprotecteurs selon l'une des revendications 1 à 4, **caractérisés en ce que** le rapports en poids des agents de surface non ionogènes (e) aux sels inorganiques citées sous (f) se situe dans le domaine de 20:1 à 1:20.

6. Agents phytoprotecteurs selon l'une des revendications 1 à 5, **caractérisés en ce que** les agents de surface (d) sont des agents de surface anioniques et le rapport en poids des herbicides (a) aux agents de surface (d) se situe dans le domaine de 6:1 à 1:10.

7. Agents phytoprotecteurs selon l'une des revendications 1 à 6, **caractérisés en ce que** le rapport en poids des herbicides (a) aux agents de surface non ionogènes (e) se situe dans le domaine de 20:1 à 1:1.

8. Procédé pour la préparation d'un agent phytoprotecteur défini selon l'une des revendications 1 à 7, **caractérisé en ce qu'**on mélange les composants (a) à (h) et éventuellement d'autres composants, qui sont contenus dans la formulation, avec l'eau (composant (j)).

9. Procédé pour la lutte contre une croissance de plantes indésirable, **caractérisé en ce qu'**on applique une quantité efficace d'un agent phytoprotecteur selon l'une des revendications 1 à 7, qui contient une ou plusieurs substances actives herbicides, aux plantes, aux parties de plantes ou à la surface cultivable.

10. Utilisation d'agents selon l'une des revendications 1 à 7, pour le contrôle d'organismes nuisibles dans la phytoprotection ou dans les terres en friche, les substances actives contenues dans les agents étant efficaces contre les organismes nuisibles.
